# DEMANDE DE BREVET EUROPEEN

(11) **EP 4 327 994 A1**
(43) Date de publication de la demande: **28.02.2024**
(21) Numéro de dépôt: 22191399.9
(22) Date de dépôt: 22.08.2022
(51) Int. Cl.: B26D 7/32, B26F 1/38, B31B 50/81, B65B 3/02, B65B 7/28, B65B 25/06, B65B 25/10, B65B 41/14, B65B 41/16, B65B 43/08, B65B 43/46, B65B 43/48, B65B 61/06, B65B 61/18, B65B 61/24, B65G 47/28, B65G 47/68, B65G 47/90, B65G 47/91, B65B 65/00

(54) **PROCÉDÉ DE CONFECTION DE FLANS D'EMBALLAGE ET MODULE CORRESPONDANT**

(71) Demandeur: Sapal S.A ., 1024 Ecublens VD (CH)
(72) Inventeur: Piot, Thierry, 1040 St-Barthélémy VD (CH); Manfroni, Claudio, 1163 Etoy (CH)
(74) Mandataire: Bovard SA Neuchâtel

(57) **Abrégé**

La présente invention se rapporte à un procédé de confection de flans d'emballage (F), comprenant :
- le déplacement d'un matériau d'emballage (M) sous forme de film, et
- la découpe dudit matériau d'emballage (M) pour former au moins un groupe de quatre flans d'emballage répartis sur quatre pistes.
Le procédé comprend en outre, après l'étape de découpe, une étape de réagencement sur deux pistes des flans (F) découpés sur quatre pistes. L'invention concerne également un module de confection de flans d'emballage, un procédé d'emballage et une machine d'emballage correspondants.

## Description

### Domaine technique de l'invention

La présente invention a trait au domaine de l'emballage de produits, notamment alimentaires, plus spécifiquement l'emballage de produits alimentaires pâteux, par exemple à base de fromage fondu.

### État de la technique

Certains produits alimentaires, notamment à base de fromage fondu, sont vendus sous forme de portions individuelles. Ces portions individuelles sont formées d'un emballage rempli par le produit pâteux et présentent généralement une forme triangulaire ou rectangulaire. Elles sont typiquement munies de bandelettes d'arrachage à languette saillante permettant à l'utilisateur d'ouvrir facilement l'emballage pour accéder au produit.

La réalisation d'une telle portion individuelle comprend typiquement :
- la confection d'un flan d'emballage par découpe d'un film de matériau d'emballage, par exemple en aluminium,
- la dépose d'une ou plusieurs bandelettes d'arrachage (ainsi qu'éventuellement d'étiquettes) avant ou après découpage du flan, et
- le conditionnement du produit dans ledit flan d'emballage, comprenant typiquement le formage du flan, par exemple par emboutissage, pour constituer une coquille destinée à recevoir un produit, la distribution de produit dans ladite coquille, et généralement la dépose d'un couvercle, puis la fermeture de l'emballage avec généralement le scellage de ses parois.

Ces différentes opérations sont effectuées les unes à la suite des autres, avec chaque opération réalisée en général simultanément soit sur deux pistes soit sur quatre pistes, en fonction de la cadence de production souhaitée. Selon la quantité d'emballages à produire par unité de temps, l'exploitant choisit une machine à deux ou quatre pistes, de sorte que le rendement soit suffisant mais que la machine ne soit pas surdimensionnée de façon à limiter les coûts à l'achat, à l'entretien, etc.

Dans le but de limiter les coûts de production, on cherche aussi à limiter au maximum la quantité de matériau d'emballage utilisé par ces machines.

Par exemple, dans le cas de portions triangulaires traitées sur deux ou quatre pistes, il est connu de découper les flans selon un motif en quinconce, de façon à limiter les pertes de matériau.

Mais il existe toujours un besoin de limiter la quantité de déchets produite par les machines d'emballage sans augmenter la complexité desdites machines ni dégrader la qualité des emballages finaux obtenus.

### Résumé de l'invention

La présente invention concerne en particulier, mais non limitativement, le cas de machines visant des volumes de production moyens, c'est-à-dire délivrant typiquement entre 200 et 300 produits par minutes. Il est généralement considéré qu'une cadence de 100 à 150 portions par piste est optimale vu le processus d'emballage des portions. Pour le volume de production moyen susmentionné, un traitement sur quatre pistes est inadapté car surdimensionné. Un traitement sur deux pistes est le mieux adapté.

Un but de la présente invention est de proposer une solution permettant d'optimiser les aspects mentionnés préalablement pour ce type de machine.

Selon l'invention, ce but est atteint grâce à un procédé de confection de flans d'emballage, et un module de confection de flans d'emballage correspondant.

L'invention concerne également un procédé d'emballage et une machine d'emballage d'un produit, notamment d'un produit alimentaire, en particulier d'un produit alimentaire pâteux, mettant en œuvre ce procédé ou ce module de confection.

Le procédé de confection de flans d'emballage selon l'invention comprend au moins les étapes suivantes :
- une étape d'avance d'un matériau d'emballage sous forme de film, sur un support définissant un plan de défilement et selon une direction de défilement, et
- une étape de découpe dudit matériau d'emballage à l'aide d'un découpoir pour former au moins un groupe de quatre flans d'emballage répartis sur respectivement quatre pistes juxtaposées dans une direction transversale orthogonale à la direction de défilement. Il est caractérisé en ce qu'il comprend, après l'étape de découpe, une étape de réagencement sur deux pistes des flans découpés sur quatre pistes.

Le procédé selon l'invention propose donc de réaliser au moins la découpe du film de matériau d'emballage sur quatre pistes, puis de réagencer les flans ainsi découpés afin de poursuivre les opérations sur deux pistes.

Le procédé selon l'invention permet tout à la fois de limiter les coûts de matière et les coûts d'équipement, et de limiter les pertes de temps de production.

Le découpage des flans sur quatre pistes permet en effet de limiter les pertes de matière par rapport à une découpe sur deux pistes. Lors de la découpe, la majeure partie du matériau perdu est située sur les bords longitudinaux du film (i.e. les bords délimitant le film dans la direction transversale). Les coûts liés aux matières premières sont donc diminués dans le cas d'un découpage sur quatre pistes.

Par ailleurs, les coûts d'équipement ne sont globalement pas ou peu augmentés par rapport à une machine traditionnelle à deux pistes : l'opération de dépose des organes d'arrachage, qui met en œuvre des dispositifs parmi les plus coûteux du process d'emballage, peut être réalisée après l'étape de réagencement et donc sur deux pistes, avec seulement deux dispositifs de dépose.

Enfin, la disponibilité du module et de la machine d'emballage à laquelle il est intégré est augmentée puisque la bobine de film adaptée à une découpe sur quatre pistes nécessite d'être remplacée moins souvent qu'une bobine adaptée à une découpe sur deux pistes, à production équivalente.

Le procédé permet de réduire la quantité de déchets, sans compromis sur la géométrie des découpes, puisque le réagencement selon l'invention est réalisé après l'opération de découpe avec un découpoir conventionnel.

Les procédés et le module/la machine selon l'invention sont particulièrement adaptés pour la réalisation de flans de forme globale triangulaire dans le but en général d'obtenir des portions/emballages à fond triangulaire, mais ils pourraient aussi bien être utilisés pour la réalisation de flans de formes différentes (flans ovales, ronds, rectangulaires, carrés, etc.).

Par forme globalement triangulaire, on entend par exemple une forme triangulaire ou une forme de triangle à pointes arrondies ou tronquées ou dont certaines surfaces sont arrondies.

De manière générale, les procédés et le module/la machine selon l'invention sont adaptés pour la réalisation de portions/emballages à fond triangulaire, carré, rectangulaire, ovale, rond ou de toute autre forme adaptée.

Le matériau d'emballage utilisé est typiquement un film flexible mince d'épaisseur par exemple comprise entre 10 et 100 microns, conditionné sous forme de bobine. Il s'agit par exemple mais non limitativement d'un film d'aluminium (aluminium fromager notamment).

Le module et la machine selon l'invention sont typiquement un module et une machine à cinématique intermittente, où les différentes étapes sont réalisées de manière séquentielle. Dans le présent exposé, la distance parcourue par un élément entre deux séquences successives est appelée le pas. La durée séparant deux séquences successives est appelée un cycle.

Lors de chaque étape ou cycle de découpe, on forme au moins un groupe de quatre flans d'emballage répartis sur respectivement quatre pistes juxtaposées dans une direction transversale orthogonale à la direction de défilement. On peut aussi former simultanément (lors d'une même étape ou cycle), N groupes de quatre flans, avec les N groupes par exemple juxtaposés transversalement. Les 4 x N flans ainsi découpés sont ensuite réagencés sur 2x N pistes, lors de l'étape de réagencement. On peut par exemple découper huit flans sur huit pistes au cours d'une même étape de découpe, puis réagencer ces huit flans sur quatre pistes au cours d'une étape de réagencement subséquente.

Dans la présente demande, on entend par plan de défilement le plan du support aussi appelé table ou table à papier, sur lequel défile le film de matériau d'emballage au cours de l'opération de découpe.

La direction de défilement est la direction de déplacement du film sur ce support.

La direction verticale est orthogonale au plan de défilement.

Enfin, une direction transversale est définie comme orthogonale aux directions verticale et de défilement.

Pour limiter les pertes de matériau d'emballage, en particulier dans le cas de flans de forme globale triangulaire, les quatre flans d'emballage d'un même groupe sont avantageusement découpés en quinconce par le découpoir.

Dans ce cas notamment, on peut définir deux paires de flans non contigus, décalées dans la direction de défilement. Dans ce cas, les flans d'une paire sont généralement alignés dans la direction transversale.

Selon un exemple, l'étape de réagencement comprend le déplacement différencié d'une première paire de flans et d'une deuxième paire de flans d'un même groupe, de sorte que les flans de la première paire et les flans de la deuxième paire se retrouvent espacés d'un pas dans la direction de défilement.

Pour aboutir à un agencement sur deux pistes, le déplacement différencié de la première paire et de la deuxième paire de flans d'un même groupe est en outre réalisé de façon à aligner chaque flan de la première paire avec un flan de la deuxième paire dans la direction de défilement.

Au cours d'un cycle correspondant à l'étape de réagencement, la course de chaque paire de flans est différente. Par exemple, la course de la deuxième paire est supérieure à la course de la première paire, dans la direction de défilement. La vitesse de déplacement des deux paires peut par exemple être différente, ou le démarrage et/ou la fin du ou des déplacements peuvent ne pas coïncider.

Dans un mode de réalisation particulier, la course de la première paire est nulle. Autrement dit, seule la deuxième paire est déplacée au cours de l'étape de réagencement.

Selon un mode de réalisation préféré toutefois, l'étape de réagencement comprend le déplacement, de préférence essentiellement simultané (i.e. les temps de déplacements des flans se chevauchent au moins en partie), des quatre flans d'un même groupe. Dans le cas d'un déplacement essentiellement simultané, on choisit les caractéristiques de mouvement des flans (relation espace/temps) afin d'éviter les interférences entre flans durant le réagencement.

Selon un exemple, l'étape de réagencement comprend en outre l'ajustement d'une distance transversale entre les deux flans d'une même paire. En particulier, l'étape de réagencement peut comprendre l'écartement ou le rapprochement de deux flans d'un même groupe, en particulier de la même paire, dans la direction transversale.

Selon un exemple, le procédé comprend, entre l'étape de découpe et l'étape de réagencement, une étape d'extraction des flans hors du découpoir. Une telle étape d'extraction est typiquement réalisée par translation des flans dans la direction de défilement. Par exemple, l'étape d'extraction est réalisée à l'aide d'un peigne, c'est-à-dire d'un organe mobile comprenant des barrettes, équipées d'un système de maintien des flans par aspiration. Un tel peigne est typiquement intégré dans le support, ses barrettes étant montées mobiles à l'intérieur d'ouvertures ménagées dans ledit support. Selon un exemple, pour réaliser l'extraction des flans hors du découpoir, le peigne peut localement être muni de quatre barrettes coopérant respectivement avec les quatre pistes du découpoir.

Selon un exemple, l'étape de réagencement comprend le soulèvement d'au moins une paire de flans, en direction verticale, au-dessus du plan de défilement. L'étape de réagencement comprend alors le maintien des flans de ladite au moins une paire de flans par leurs faces opposées au support et le déplacement de chaque flan ainsi maintenu selon un mouvement comprenant au moins une composante dans la direction de défilement, et au moins une composante dans une direction verticale orthogonale au plan de défilement, et éventuellement en complément une composante dans la direction transversale. L'amplitude de déplacement dans la direction verticale peut par exemple être de l'ordre de 2 à 50 mm, de préférence entre 10 et 20 mm. A l'aide d'organes de maintien mobiles, les flans sont soulevés au-dessus du support puis abaissés et reposés de nouveau sur ledit support, plus en aval. Le soulèvement des flans évite leur frottement contre le support, permet un déplacement particulièrement précis des flans et r rend le support et les organes de maintien des flans accessibles pour leur nettoyage.

Les trajectoires de déplacement des flans, projetées dans le plan de défilement, peuvent être composées de segments de droites et/ou de courbes, afin d'éviter toute interférence entre les flans et/ou les organes de maintien.

Selon un exemple, le procédé peut comprendre en outre au moins une étape de dépose d'au moins une bandelette d'arrachage pour chaque flan d'emballage. Les bandelettes d'arrachage peuvent être déposées avant l'étape de découpe (dans ce cas, chaque emplacement du film destiné à former un flan est associé à au moins une bandelette). Préférentiellement toutefois, les bandelettes d'arrachage sont déposées après l'étape de découpe.

Avantageusement, l'étape de réagencement est réalisée après l'étape de découpe et avant l'étape de dépose de bandelettes d'arrachage.

L'invention concerne également un procédé d'emballage d'un produit, notamment d'un produit alimentaire, en particulier d'un produit alimentaire pâteux, comprenant:
- la confection de flans d'emballage par mise en œuvre du procédé de confection tel que défini précédemment, et
- le conditionnement du produit dans lesdits flans d'emballage pour former des portions de produit emballées.

Le conditionnement du produit comprend typiquement au moins les étapes suivantes :
- le formage des dits flans de façon à constituer avec chaque flan une coquille destinée à recevoir le produit,
- la distribution de produit dans chaque coquille ainsi constituée,
- la fermeture de l'emballage comprenant ladite coquille.

Le conditionnement peut en outre comporter, après l'étape de distribution de produit, l'adjonction d'un couvercle préalablement préparé, sur la coquille ainsi remplie.

L'invention concerne également un module de confection de flans d'emballage, comprenant:
- des moyens de déplacement d'un film de matériau d'emballage sur un support définissant un plan de défilement et selon une direction de défilement, et
- une station de découpe comprenant un découpoir pour la découpe, dans ledit matériau d'emballage, d'au moins un groupe de quatre flans d'emballage sur respectivement quatre pistes juxtaposées dans une direction transversale orthogonale à la direction de défilement,
ledit module étant caractérisé en ce qu'il comprend, après la station de découpe, une station de réagencement comprenant un dispositif de réagencement sur deux pistes des flans découpés sur quatre pistes.

Selon un exemple, le module de confection des flans comprend en outre au moins une station de dépose de bandelettes d'arrachage pour la dépose d'au moins une bandelette d'arrachage pour chaque flan d'emballage.

De façon préférée, la station de réagencement est disposée après la station de découpe et avant la station de dépose de bandelettes d'arrachage.

Selon des aspects spécifiques, pouvant être considérés indépendamment ou en combinaison :
- le découpoir peut être agencé pour découper les quatre flans d'emballage d'un même groupe en quinconce ;
- le dispositif de réagencement peut être adapté pour déplacer de façon différenciée une première paire de flans et une deuxième paire de flans d'un même groupe, de façon à séparer d'un pas les flans de la première paire et les flans de la deuxième paire dans la direction de défilement ;
- le dispositif de réagencement peut être adapté pour aligner chaque flan de la première paire avec un flan de la deuxième paire dans la direction de défilement ;
- le dispositif de réagencement peut être adapté pour ajuster une distance transversale entre les deux flans d'une même paire ;
- le module peut comprendre, entre la station de découpe et la station de réagencement, un système d'extraction des flans hors du découpoir, par translation des flans dans la direction de défilement ;
- le dispositif de réagencement peut être configuré pour déplacer au moins une paire de flans en direction verticale, au-dessus du plan de défilement.

L'invention concerne encore une machine d'emballage d'un produit, notamment d'un produit alimentaire, en particulier d'un produit alimentaire pâteux, comprenant:
- au moins un module de confection de flans d'emballage tel que défini précédemment,
- un module de conditionnement du produit dans lesdits flans d'emballage pour former des portions de produit emballées.

La machine peut être une machine à quatre puis deux pistes, incluant un module de confections de flans d'emballage tel que décrit précédemment, ou il peut s'agir d'une machine de 4x N puis 2 x N pistes, comprenant N modules de confections de flans d'emballage selon l'invention, par exemple juxtaposés dans la direction transversale.

Le module de conditionnement comprend typiquement :
- une station de formage dans laquelle chaque flan est conformé sous forme d'une coquille destinée à recevoir le produit,
- une station de dosage dans laquelle le produit est distribué dans les dites coquilles,
- éventuellement une station pose-couvercles (dans ce cas la fermeture de l'emballage se fait en rabattant les bords protubérants de la coquille sur le couvercle ainsi déposé), dans laquelle par exemple des découpes en forme de couvercles sont débitées de bobines de matériaux, saisies et déposées sur les coquilles remplies de produit, et/ou
- une station de fermeture de l'emballage par rabat des bords protubérants de la coquille,
- généralement une station de scellage de l'emballage ainsi constitué.

L'invention concerne enfin un dispositif pour le réagencement d'une pluralité de flans d'emballage sur un support définissant un plan de défilement, depuis une configuration initiale vers une configuration réagencée, le dispositif de réagencement comprenant :
- une pluralité d'organes de maintien, chacun étant configuré pour maintenir un desdits flans par la face libre dudit flan opposée au support, et
- des moyens de déplacement pour conférer à au moins un organe de maintien un mouvement comprenant au moins une composante dans une première direction orthogonale audit plan de défilement, une composante dans une deuxième direction parallèle audit plan de défilement et une composante dans une troisième direction orthogonale aux première et deuxième directions

Un dispositif de réagencement selon l'invention est adapté pour être intégré dans un module tel que défini précédemment. Là, il a pour fonction de réagencer les flans d'emballage d'un même groupe (c'est-à-dire un ensemble de quatre flans découpés au cours d'un même cycle de découpe) sur la table formant support de flans. La configuration initiale est la configuration telle que découpée. La configuration réagencée est typiquement une configuration dans laquelle les flans d'un même groupe sont disposés sur deux pistes.

Une fois le dispositif intégré dans le module, la première direction se retrouve parallèle à la direction verticale, la deuxième direction est parallèle à la direction de défilement du module, et une troisième direction, qui sera définie dans la suite, est parallèle à la direction transversale du module.

Chaque organe de maintien comporte des moyens permettant de rendre le flan auquel il est associé solidaire de ses déplacements. Ces moyens sont avantageusement des moyens pneumatiques (autrement dit les organes de maintien sont des organes de maintien par aspiration ou ventouses), qui peuvent être commandés conjointement (une commande pour tous les organes) ou de façon indépendante pour chaque organe de maintien (une commande par organe) ou par ensemble - notamment par paire - d'organes de maintien (une commande par ensemble).

Selon un exemple, le système de déplacement comprend une base mobile en translation dans la première direction, et portant les organes de maintien.

Selon un exemple, le système de déplacement comprend en outre au moins un chariot monté coulissant par rapport à la base dans la deuxième direction, ledit au moins un chariot comprenant au moins un rail s'étendant dans la troisième direction, avec au moins un organe de maintien monté coulissant le long dudit au moins un rail.

Par rail, on entend ici tout moyen permettant un coulissement relatif d'un organe de maintien par rapport au chariot.

Selon un exemple, le système de déplacement comprend des moyens pour l'entraînement actif de ladite base dans la première direction et de chaque chariot dans la deuxième direction.

Autrement dit, les moyens de déplacement peuvent comprendre un système d'entraînement configuré pour générer (activement), pour chaque organe de maintien, au moins une composante de mouvement dans la première direction et une composante de mouvement dans ladite deuxième direction. Le système d'entraînement peut comprendre plusieurs générateurs de mouvement, par exemple un générateur de mouvement pour le déplacement dans la première direction, et au moins un générateur de mouvement pour le déplacement dans la deuxième direction. Un générateur de mouvement peut comprendre par exemple un système à came et levier, ou encore un moteur électrique, lequel peut notamment être direct (moteur linéaire) ou indirect (rotatif avec transmission).

De façon avantageuse, et notamment pour l'économie de moyens, le mouvement de chaque organe de maintien dans la troisième direction peut être un mouvement dérivé, autrement dit réalisé sans générateur de mouvement dédié. Le système de déplacement peut par exemple comprendre un dispositif de guidage passif configuré pour coopérer avec ledit au moins un organe de maintien lors de son déplacement dans la deuxième direction de sorte à dériver dudit déplacement son déplacement dans la troisième direction.

Ce dispositif de guidage peut par exemple comprendre une rainure de guidage, par exemple réalisée dans une plaque configurée pour rester fixe dans la deuxième direction et solidaire de la base, arrangée pour recevoir de manière coulissante un galet solidaire de l'organe de maintien.

Lorsque le dispositif de réagencement doit servir au déplacement différencié d'un premier ensemble de flans et d'un deuxième ensemble de flans d'un même groupe, en ce sens que chaque ensemble est déplacé selon une course différente dans la deuxième direction au cours d'un même cycle, par exemple dans le cas où le réagencement concerne quatre flans agencés en quinconce, comprenant donc deux paires de flans, le système de déplacement peut comprendre plusieurs chariots, avec une course - dans la deuxième direction - donnée pour chaque chariot.

Selon un exemple préféré, le système de déplacement comprend au moins deux chariots déplaçables indépendamment par rapport à la base, dans la deuxième direction, et munis chacun d'au moins un rail s'étendant dans la troisième direction, avec deux organes de maintien montés sur chaque chariot, et au moins l'un d'eux monté coulissant le long dudit au moins un rail dudit chariot.

### Brève description des dessins

Les particularités et les avantages de la présente invention apparaîtront avec plus de détails dans le cadre de la description qui suit avec un exemple de réalisation donné à titre illustratif et non limitatif en référence aux figures ci-annexées qui représentent :
- La figure 1 est une vue générale, en perspective, d'un module de confection de flans d'emballage selon un mode de réalisation de l'invention,
- La figure 2A illustre le dispositif de réagencement du module de la figure 1 en vue de dessus, dans une position dite position de prise dans laquelle chaque organe de maintien s'associe respectivement au flan qu'il doit déplacer (certains composants ont été omis pour améliorer la visibilité),
- La figure 2B est une vue de côté selon la flèche IIB de la figure 2A et illustre les chariots du dispositif de réagencement dans la position de prise,
- La figure 3A illustre le dispositif de réagencement du module de la figure 1 en vue de dessus, dans une position dite position de dépose dans laquelle les flans ont été réagencés (certains composants ont été omis pour améliorer la visibilité),
- La figure 3B est une vue de côté selon la flèche IIIB de la figure 3A et illustre les chariots du dispositif de réagencement dans la position de dépose,
- La figure 4 est une vue plus détaillée et complète, en perspective, du dispositif de réagencement avec les organes de maintien en position de prise,
- La figure 5 est une vue plus détaillée, en perspective, du dispositif de réagencement avec les organes de maintien en position de dépose,
- La figure 6 est une vue détaillée, en perspective, du peigne et du support de peigne du module de la figure 1, en position arrière,
- La figure 7 est une vue détaillée, en perspective, du peigne et du support de peigne du module de la figure 1, en position avant,
- La figure 8 illustre les trajectoires de réagencement de chaque flan d'un même groupe,
- La figure 9 illustre les pertes de matériau d'emballage dans le cas d'une découpe des flans en quinconce sur quatre pistes, comme dans le cas du module de confection de flans selon l'invention,
- La figure 10 illustre les pertes de matériau d'emballage dans le cas d'une découpe des flans en quinconce sur deux pistes,
- La figure 11 illustre schématiquement une machine d'emballage intégrant un module de confection de flans d'emballage selon la figure 1.

### Description détaillée

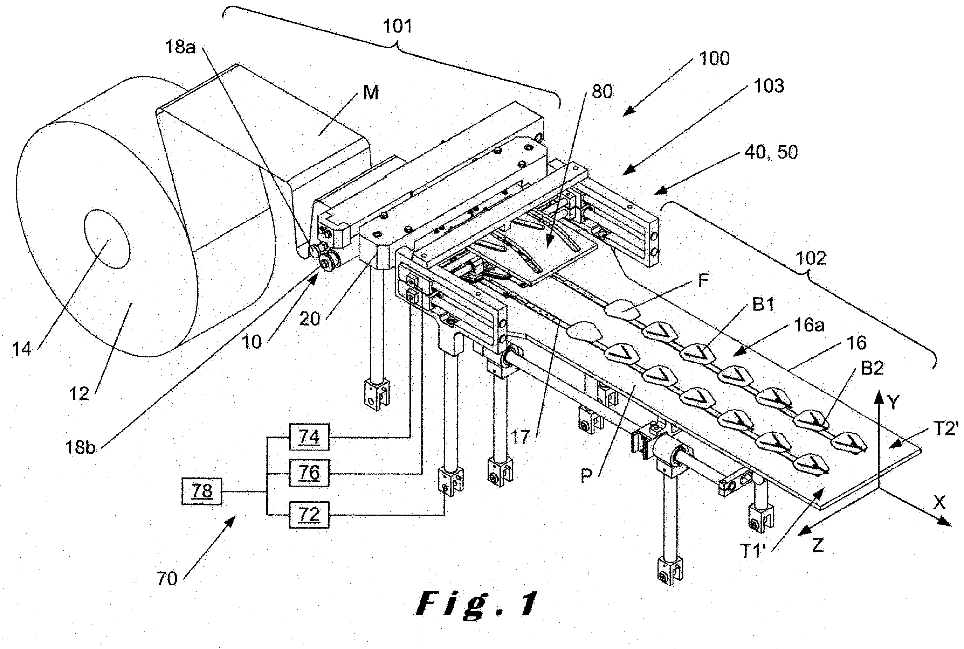

La figure 1 illustre un module 100 de confection de flans d'emballage selon un mode de réalisation de l'invention. Un tel module 100 est destiné à la découpe de flans F dans un film de matériau d'emballage M défilant dans un plan de défilement P, et à la préparation de ces flans F, avant utilisation ultérieure pour le conditionnement d'un produit, notamment un produit alimentaire pâteux.

Le module 100 de confection des flans F est destiné à être intégré dans une machine d'emballage 1000.

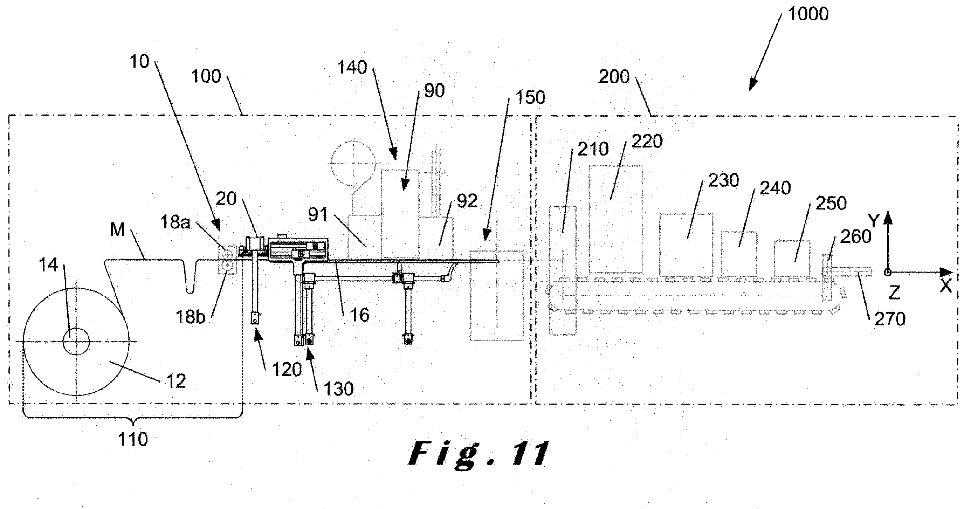

Une telle machine 1000 est par exemple illustrée schématiquement sur la figure 11. Elle comprend, outre le module 100 de confection des flans, un module 200 de conditionnement du produit dans les flans d'emballage découpés et préparés préalablement par le module de confection 100. Ce module de conditionnement 200 sera décrit plus en détail dans la suite en lien avec la figure 11.

Une machine d'emballage 1000 selon l'invention, intégrant le module de confection 100 précité, est une machine à cinématique intermittente, opérant par cycles successifs. Elle opère avantageusement selon une direction principale de défilement X conjointe aux modules de confection de flans 100 et de conditionnement 200.

Dans la présente demande, on définit l'amont et l'aval par rapport à la direction de défilement X du matériau M ou des flans d'emballage F le long de la ligne. Cette direction de défilement X, ainsi que le plan de défilement P, sont généralement horizontaux.

On définit également la direction verticale Y, orthogonale à la direction de défilement X et au plan de défilement P, et la direction transversale Z, orthogonale aux directions X et Y.

Le module de confection des flans 100 va à présent être décrit plus en détail en référence notamment aux figures 1 et 11.

Le module de confection des flans 100 comprend une première partie 101 ou partie de formation des flans, et une deuxième partie 102, ou partie de préparation des flans.

La première partie 101, située le plus en amont, comprend :
- une station d'amenée 110 munie de moyens 10 d'avance du film M de matériau d'emballage dans le plan de défilement P et selon la direction de défilement X, et
- une station de découpe 120 comprenant un découpoir 20 pour la découpe, dans le film, des flans d'emballage F.

La deuxième partie 102, située en aval, comprend, dans l'exemple, au moins une station 140 de dépose d'au moins une bandelette d'arrachage B1, B2 sur chaque flan d'emballage F.

Le volume de production du module 100 (et donc de la machine 1000) selon l'invention est typiquement compris entre 200 et 300 produits par minute. La machine 1000 à laquelle le module 100 doit être intégré est, en conséquence, une machine de type à deux pistes. Autrement dit, le module 100 délivre des flans sur deux pistes, et ces flans sont ensuite traités sur deux pistes pour le conditionnement du produit.

Mais si le module 100 travaille sur une base de deux pistes T1', T2' sur sa deuxième partie 102, il a pour particularité de travailler sur une base de 4 pistes T1, T2, T3, T4 sur sa première partie 101, dans le but d'obtenir un minimum de déchets de film lors de la découpe des flans. Au niveau du découpoir 20, le film est donc découpé pour réaliser quatre flans par cycle.

Pour faire la transition entre la première partie 101 et la deuxième partie 102, le module selon l'invention comprend une partie intermédiaire 103 incluant une station 130 de réagencement sur deux pistes des flans découpés sur quatre pistes par le découpoir 20.

On comprend que la deuxième partie 102 travaille ainsi à cadence machine, tandis que la première partie 101 et la partie intermédiaire 103 travaillent à demi-cadence.

Les différentes stations du module de confection 100 selon le mode de réalisation illustré vont à présent être décrites plus en détail.

Le film M de matériau d'emballage peut être un film d'aluminium, par exemple d'aluminium fromager, ou il peut être formé de tout autre matériau adapté au produit destiné à être emballé. Il est typiquement conditionné sous forme d'une bobine 12, dévidée au moyen d'un dévidoir 14.

Au niveau de la station d'amenée 110, le film M, déroulé (généralement continûment) par le dévidoir 14, est avancé sur un support ou table 16 dont la surface supérieure 16a forme le plan de défilement P, généralement horizontal. Il est ainsi amené sous le découpoir 20. Les moyens d'avance 10 réalisent l'avance du film M vers le découpoir 20 et comprennent, par exemple des rouleaux d'avance 18a, 18b du type illustré sur les figures 1 et 11 ou des barres de pinces. L'avance peut être intermittente ou continue, de préférence intermittente.

Au niveau de la station de découpe 120, le découpoir 20 (non illustré en détail sur les figures) comporte, de manière connue :
- en partie inférieure, des matrices fixes aux formes de la découpe à obtenir, intégrées dans le support 16, et
- en partie supérieure, des lames de scie configurées pour pénétrer verticalement entre ces matrices fixes pour réaliser la découpe, et, entre les lames, des serres-flans généralement montés sur ressort.

Lors de la descente verticale des lames, les serres flans sont également abaissés jusqu'à venir au contact des flans, de façon à les maintenir en position pendant la découpe.

Dans l'exemple particulier illustré, les flans à découper F ont une forme globale triangulaire. La découpe est réalisée de sorte que le plan de symétrie de chaque flan F triangulaire soit parallèle à la direction de défilement X. Dans l'exemple spécifique, les flans F sont orientés avec leur pointe vers l'aval. Cet exemple n'est toutefois pas limitatif, et la découpe pourra aussi être inversée, avec la pointe des flans F orientée vers l'amont.

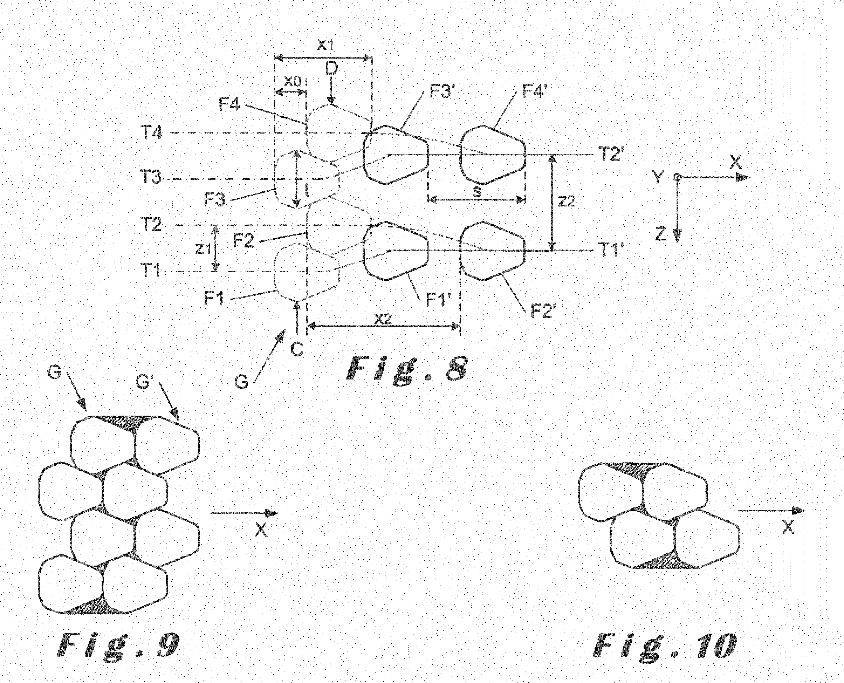

Lors d'un cycle de découpe, comme illustré sur la figure 8 notamment, quatre flans F alignés ou sensiblement alignés en direction transversale sont découpés, formant un groupe G. Les plans de symétrie de ces flans, parallèles à la direction de défilement X, définissent quatre pistes T1 à T4 parallèles et non confondues.

Pour la suite, on assigne des rangs 1 à 4 aux flans notés par conséquent F1 à F4 d'un même groupe.

Pour diminuer les pertes de matériau d'emballage, la découpe est avantageusement réalisée en quinconce, par exemple de la manière illustrée sur les figures 8 ou 9 ou d'une manière similaire :
Les flans respectivement F1, F3 et F2, F4 non contigus d'un groupe G sont alignés dans la direction transversale Z et forment une paire. Chaque paire a une abscisse différente dans la direction de défilement X. Ainsi, dans l'exemple, une première paire C, située le plus en amont, est constituée par les flans F1 et F3. Une deuxième paire D, située plus en aval, est constituée par les flans F2 et F4. La même dénomination sera conservée dans la suite de la description.

Deux flans contigus d'un même groupe sont par ailleurs décalés transversalement d'une distance z1 inférieure à la largeur l d'un flan dans cette même direction Z.

Deux groupes G, G' de flans F, correspondant à deux cycles successifs de découpe, sont illustrés sur la figure 9. Sur cette figure, les chutes de matériau d'emballage, autrement dit les parties de matériau qui ne seront pas utilisées pour l'emballage, sont représentées par des hachures.

Pour comparaison, la figure 10 illustre des flans identiques découpés également en quinconce, mais sur deux pistes seulement.

On remarque que, dans les deux cas, la plus grande partie des chutes est localisée sur les bords longitudinaux. La quantité de perte est donc moins importante proportionnellement avec une découpe sur quatre pistes qu'avec une découpe sur deux pistes. Sur des découpes triangulaires du type illustré, le pourcentage de perte par rapport à la surface totale découpée est inférieur d'environ 30% pour une découpe sur quatre pistes, par rapport à une découpe sur deux pistes.

Une fois découpés, les flans F sont extraits du découpoir 20, par translation dans la direction de défilement X.

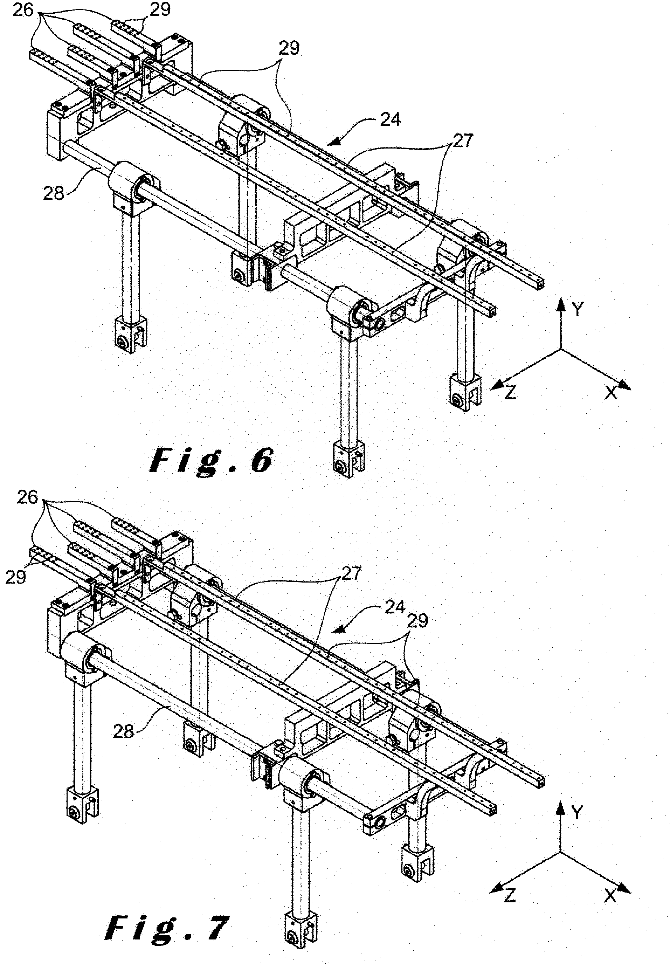

Ce transfert des flans F en sortie du découpoir 20 et jusqu'à la station de réagencement 130 plus en aval s'effectue au moyen d'un peigne inférieur à pas de pèlerin 24 tel qu'illustré sur les figures 6 et 7. Le même peigne est également utilisé pour transférer les flans aux stations aval après leur réagencement.

Un tel peigne 24 comprend une pluralité de dents ou barrettes 26, 27 dont chacune est associée à une piste T de flans à déplacer. Dans l'exemple, quatre barrettes 26 sont ainsi prévues pour coopérer avec les quatre pistes T1, T2, T3, T4 de la première partie de module et deux barrettes 27 sont prévues pour coopérer avec les deux pistes T1' et T2' sur la deuxième partie 102 de module. Les barrettes 26, 27 sont intégrées dans des ouvertures 17 du support 16 et sont solidaires d'un cadre 28 déplaçable situé sous le support 16. Le cadre 28 est déplaçable pas à pas dans la direction de défilement X comme illustré par les figures 6 (position la plus amont) et 7 (position la plus aval). Il peut aussi, bien que dans une moindre mesure, être déplaçable également en direction verticale Y. Une élévation de quelques millimètres peut par exemple être prévue lors du déplacement des flans F dans la direction de défilement X, pour éviter leur frottement sur la table 16. Un abaissement de quelques millimètres peut être prévu cette fois lors du retour de peigne, pour éviter le retournement ou le froissement des flans F.

Pour maintenir les flans F à leurs barrettes 26, 27 lors du déplacement, chaque barrette 26 est liée à un système de maintien par aspiration (seuls les orifices d'aspiration 29 sont illustrés sur les figures 6 et 7), dont l'actionnement/arrêt permet de contrôler le déplacement séquentiel des flans F. Le relais de vide entre le peigne inférieur 24 et le support 16 permet ainsi l'avance des découpes pas-à-pas.

Sans modifier leur positionnement relatif, le peigne 24 amène les quatre flans F1 à F4 d'un même groupe G hors du découpoir 20 et jusqu'à la station de réagencement 130. Là, les flans sont réagencés sur deux pistes T1' et T2' au moyen d'un dispositif de réagencement 40 qui sera décrit plus loin.

Dans l'exemple, le réagencement des flans comprend le déplacement différencié de la première paire C de flans F1, F3 et de la deuxième paire D de flans F2, F4 d'un même groupe G, de sorte à espacer d'un pas de machine S les flans de la première paire C et les flans de la deuxième paire D dans la direction de défilement X et de sorte à aligner chaque flan F1, F3 de la première paire C avec un flan F2, F4 de la deuxième paire D dans la direction de défilement X. Le pas de machine S correspond à l'amplitude de déplacement de chaque pas du peigne 24 en direction de défilement X

Selon le mode de réalisation préféré illustré, tous les flans F1 à F4 d'un même groupe G sont déplacés lors d'un cycle de réagencement, notamment pour pouvoir garder un centrage relativement constant des groupes de flans sur le support 16, dans la direction transversale Z. Comme alternative cependant, seule une paire de flans, par exemple la deuxième paire D de flans F2-F4, pourrait être déplacée pour être alignée avec la première paire C restée immobile. Mais les flans ne seraient plus alors centrés sur la table dans la direction transversale Z.

Comme illustré par la figure 8, à leur entrée dans la station de réagencement 130, la première et la deuxième paire de flans C, D sont décalées d'une distance x0 mesurée dans la direction de défilement X. La distance x0 est inférieure au pas S de la machine. Lors du réagencement, le mouvement des flans dans la direction X sert à caler l'espacement des flans sur le pas S de la machine. Dans l'exemple, la deuxième paire D est déplacée d'une distance x2 dans la direction de défilement X, tandis que la première paire C est déplacée d'une distance x1. Après réagencement, les deux paires de flans C, D sont espacées, dans la direction de défilement, d'une distance égale au pas S de la machine. On notera que sur l'ensemble des figures, pour faciliter la compréhension, les flans représentés dans leur position réagencée sont assortis d'un prime.

Le mouvement en direction transversale Z sert, lui, à aligner les flans sur les deux lignes T1', T2' dans la direction de défilement X, autrement dit à placer, l'un derrière l'autre dans ladite direction, un flan d'une paire et un flan de l'autre paire. Dans l'exemple, le flan F1' se retrouve ainsi aligné avec le flan F2' et le flan F3' avec le flan F4'.

Selon une disposition particulière, le réagencement peut aussi comprendre un ajustement de la distance mesurée transversalement entre deux flans d'une même paire. On peut ainsi décider de l'écartement z2 entre les deux pistes de la deuxième partie 102 de module 100, notamment indépendamment de l'écart z1 entre deux flans d'une même paire dans la première partie 101.

Lors du réagencement, pour éviter les frottements avec le support 16, permettre une grande flexibilité dans les trajectoires des flans F et assurer un positionnement précis, les flans F sont avantageusement soulevés dans la direction verticale Y, au-dessus du plan de défilement P, puis abaissés pour leur re-positionnement sur le support 16. L'amplitude de déplacement des flans F dans la direction verticale Y peut être de l'ordre de 2 à 50 mm, de préférence entre 10 et 20 mm.

Pour l'exemple illustré, les trajectoires de chaque flan, projetées dans un plan parallèle au plan de défilement, sont représentées sur la figure 8. Elles sont généralement composées de segments de droites et/ou de courbes, afin d'éviter toute interférence lors du déplacement.

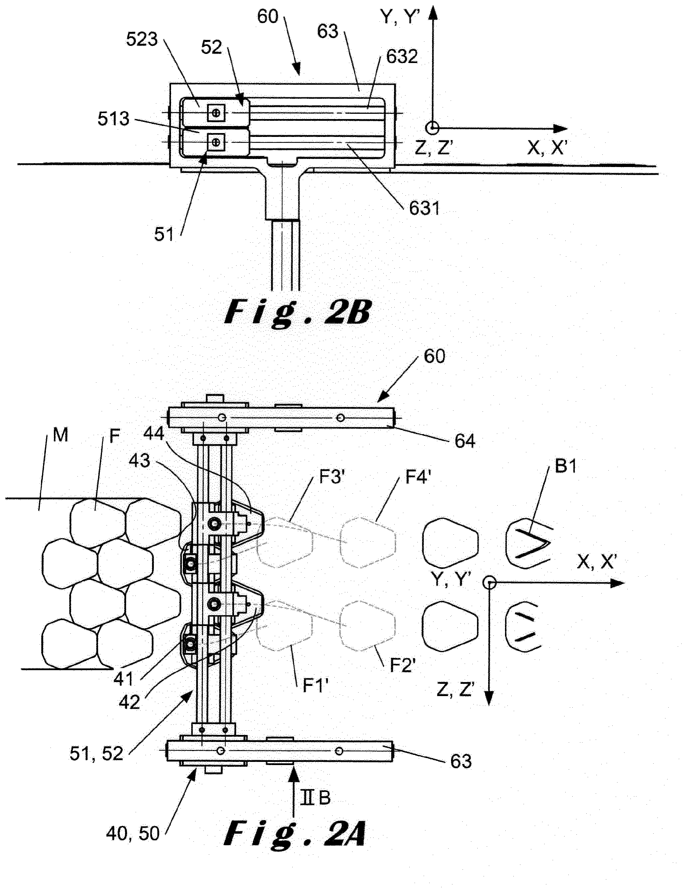

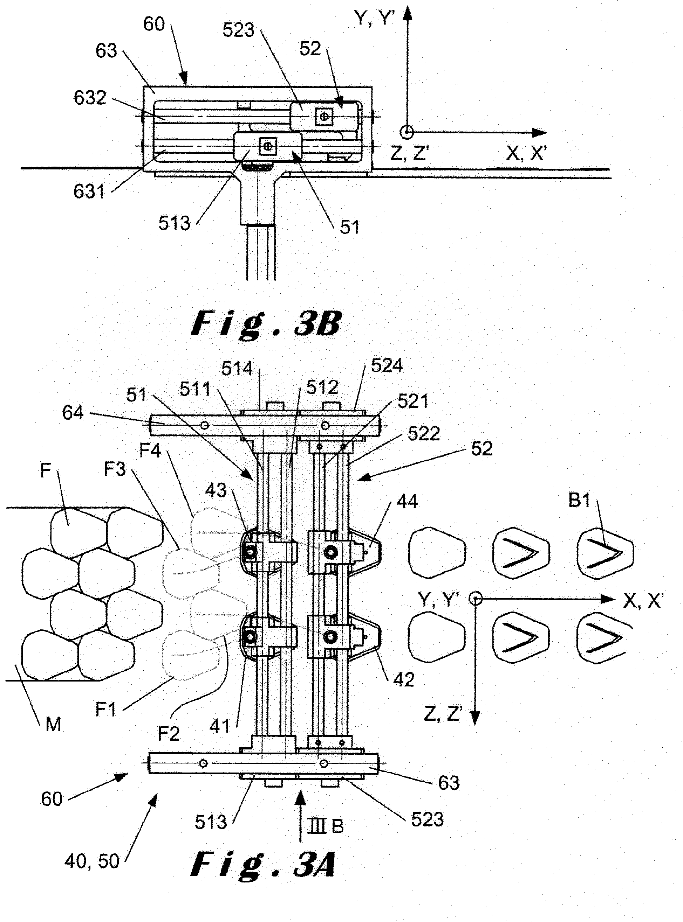

Un dispositif de réagencement 40 va à présent être décrit, à titre d'exemple, en référence aux figures 2A, 2B, 3A, 3B.

Dans l'exemple particulier représenté, le dispositif 40 comprend ici quatre organes de maintien 41, 42, 43, 44 configurés pour maintenir chacun l'un parmi les flans respectivement F1, F2, F3, F4 d'un même groupe G.

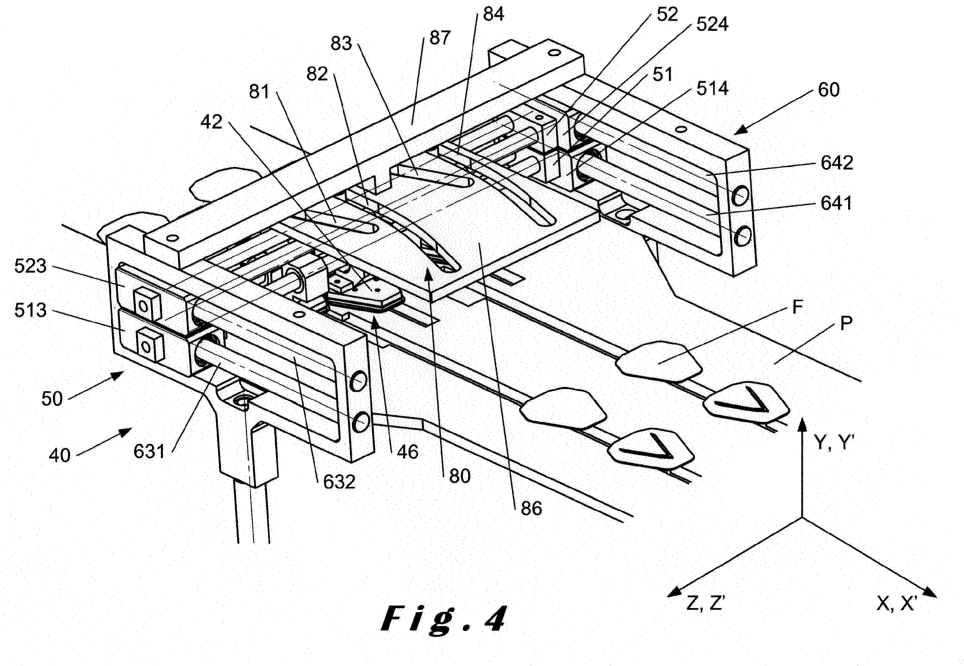

Dans l'exemple, chaque organe de maintien 41, 42, 43, 44 est un organe de maintien par aspiration ou ventouse, muni d'une surface 46 (voir figure 4), avantageusement sensiblement plane, percée d'orifices d'aspiration, destinée à venir au contact d'un flan. La forme de ladite surface de contact 46 correspond avantageusement à celle du flan F associé, de sorte que le flan F est maintenu sur l'ensemble de sa surface et est ainsi empêché de se froisser durant le réagencement.

Les systèmes d'aspiration (non représentés) des différents organes 41, 42, 43, 44 peuvent fonctionner indépendamment les uns des autres, ou en commun (pour tous les organes ou certains d'entre eux).

Le dispositif de réagencement 40 comprend en outre un système de déplacement 50 pour le déplacement contrôlé de chaque organe de maintien 41, 42, 43, 44, permettant le réagencement de chaque flan F1, F2, F3, F4 de sa position initiale (après découpe sur quatre pistes) à sa position réagencée (sur deux pistes).

Le déplacement des organes de maintien 41, 42, 43, 44 est défini selon une première direction Y' du dispositif 40 orthogonale au plan de défilement formé par le support 16, une deuxième direction X' parallèle au plan du support et une troisième direction Z' orthogonale aux deux premières directions. Une fois le dispositif 40 intégré au module de confection des flans 100, la première direction Y' se retrouve confondue avec la direction verticale Y, la deuxième direction X' avec la direction de défilement X et la troisième direction Z', avec la direction transversale Z. Pour faciliter la compréhension, il sera fait référence dans la suite au dispositif 40 une fois monté et donc aux directions de défilement X, verticale Y et transversale Z.

Dans l'exemple particulier représenté, le système de déplacement 50 est basé sur une succession de coulisses associées respectivement à une direction de déplacement, la combinaison de plusieurs coulisses permettant l'obtention de trajectoires variées des organes de maintien dans deux ou trois dimensions.

Plus spécifiquement, le système de déplacement 50 comprend ici :
- une base 60, déplaçable dans la direction verticale Y,
- deux chariots 51, 52, déplaçables par rapport à la base, dans la direction X,
- un système d'entraînement 70 pour l'entraînement de ladite base 60 et des chariots 51, 52, et
- un dispositif de guidage passif 80 configuré pour coopérer avec chaque organe de maintien lors de son déplacement dans la direction X de sorte à dériver dudit déplacement son déplacement dans la direction Z.

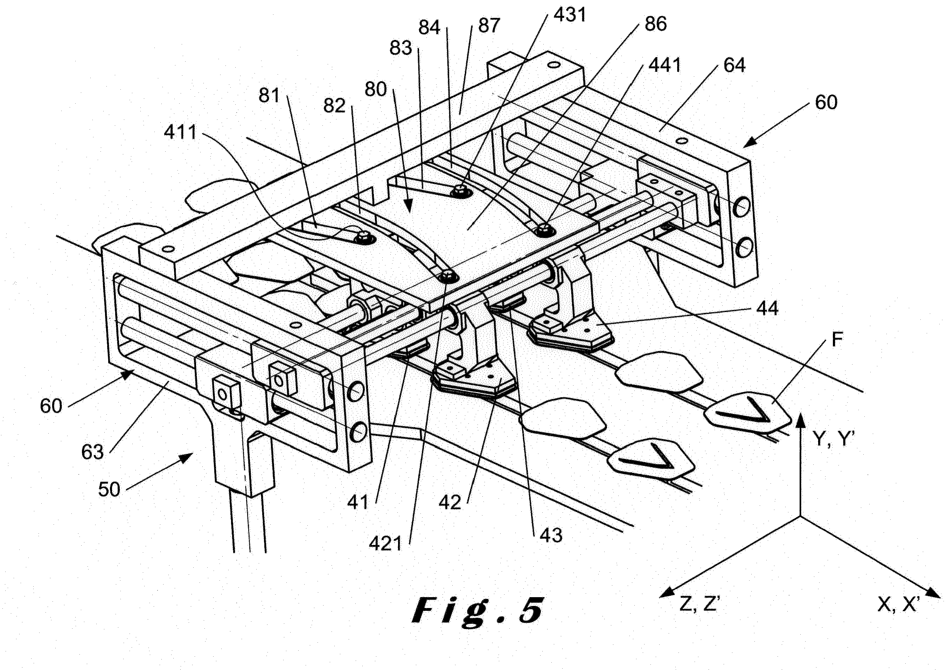

Comme illustré sur les figures 4 et 5 notamment, le système 50 forme un portique mobile destiné à venir surplomber le support d'un module de confection tel que décrit précédemment. Les éléments du système 50 vont être décrits plus en détail dans la suite.

Dans l'exemple particulier représenté, la base 60 comprend deux portions de base 63, 64, parallèles, solidaires l'une de l'autre, et espacées dans la direction transversale Z. Ces portions sont configurées pour se translater conjointement dans la direction verticale Y, par exemple en coulissant le long de tiges fixes.

Chaque portion de base 63, 64 est en outre munie de deux axes respectivement 631, 632 et 641, 642 s'étendant dans la direction X, avec les axes supérieurs 631, 641 définis dans un plan supérieur et les axes inférieurs 641, 642 définis dans un plan inférieur parallèle au plan supérieur.

Un premier chariot 51 et un second chariot 52 sont montés coulissant par rapport à la base 60, dans la direction X.

Dans l'exemple, des pièces terminales 513, 514 du premier chariot 51 sont montés coulissantes respectivement le long des axes supérieurs 631 et 641. De la même façon, des pièces terminales 523, 524 du second chariot 52 sont montés coulissantes respectivement le long des axes inférieurs 641 et 642.

Chaque chariot 51, 52 est en outre associé à une paire de flans à déplacer C, D. Dans l'exemple, le premier chariot 51 est associé à la première paire de flans C. Le second chariot 52, à la deuxième paire de flans D.

En outre, chaque chariot 51, 52 comprend au moins un rail transversal (deux, respectivement 511, 512 et 521, 522, dans l'exemple illustré), solidaire, à ses extrémités, des pièces terminales respectivement 513, 514 et 523, 524.

Deux organes de maintien, destinés à être associés respectivement à l'un et l'autre flan de la paire concernée, sont montés à coulissement le long de chaque paire de rails. Ainsi en particulier, les organes de maintien 41, 43, associés respectivement aux flans F1 et F3, sont montés sur les rails 511, 512 du premier chariot 51. Les organes de maintien 42, 44, associés aux flans respectivement F2 et F4, sont montés sur les rails 521, 522 du deuxième chariot 52.

Le système de déplacement 50 comprend un système d'entraînement 70 (voir figure 1) pour l'entraînement (actif) des organes de maintien 41, 42, 43, 44 dans la direction verticale Y et dans la direction de défilement X.

Le déplacement vertical (en Y) est induit par l'entraînement vertical de la base 60 : Tous les organes de maintien 41, 42, 43, 44 sont déplacés simultanément dans cette direction verticale Y et selon la même course.

En l'espèce, l'abscisse verticale de la base 60 est au plus bas dans les positions de prise et de dépose : Elle est augmentée après la prise puis rediminuée avant la dépose.

Le déplacement dans la direction de défilement X est induit par l'entraînement de chaque chariot 51, 52 dans ladite direction X : la course de chaque chariot 51, 52, et donc de chaque paire d'organes de maintien associée à un chariot, peut être différente dans cette direction X. La caractéristique de mouvement espace-temps en direction X peut également être spécifique pour chaque chariot.

Les figures 2A, 3A et respectivement 2B, 3B illustrent, dans l'exemple particulier considéré, le premier chariot 51 et le deuxième chariot 52 dans la position de prise et respectivement de dépose des flans F. Dans la position de prise, les chariots 51, 52 sont alignés verticalement. Ils ont la même abscisse dans la direction de défilement X. Dans la position de dépose, les chariots 51, 52 sont décalés dans ladite direction X.

Les mouvements en Y et en X peuvent être simultanés ou successifs.

Le système d'entraînement 70 comprend typiquement un générateur de mouvement 72 destiné à actionner le mouvement de la base 60, et un générateur de mouvement respectivement 74, 76 associé à chaque chariot 51, 52.

Chaque générateur de mouvement peut par exemple comprendre un système à came et levier, ou encore un moteur électrique, linéaire direct ou rotatif avec transmission et/ou levier intermédiaire.

Les générateurs de mouvement 72, 74, 76 sont par exemple reliés à une unité de contrôle 78, coordonnant les mouvements des différentes parties du système d'entraînement 70.

Le déplacement de chaque organe de maintien 41, 42, 43, 44 en direction transversale Z est avantageusement obtenu par dérivation de son mouvement dans la direction de défilement X.

Un entraînement dédié à cette composante du mouvement est donc omis ici. Dans l'exemple illustré, le système de déplacement 50 comprend un dispositif de guidage 80 sous la forme d'une plaque 86, solidaire de la base 60 (dans l'exemple, par l'intermédiaire d'une barre de fixation 87 surmontant les chariots 51, 52), et munie de rainures de guidage respectivement 81, 82, 83, 84. Chaque rainure de guidage 81, 82, 83, 84 présente une ligne médiane, droite et/ou courbe, correspondant à la trajectoire souhaitée pour le flan à déplacer, en projection dans le plan de défilement P. Dans l'exemple, chaque rainure 81, 82, 83, 84 forme un angle avec la direction de défilement, i.e. est sensiblement oblique (avec donc une composante dans la direction de défilement X et dans la direction transversale Z).

Comme illustré sur la figure 5 notamment, chaque rainure de guidage 81, 82, 83, 84 est adaptée pour recevoir un galet de guidage 411, 421, 431, 441 solidaire d'un organe de maintien respectivement 41, 42, 43, 44. Lors du déplacement d'un chariot 51, 52 relativement à la base 60, dans la direction de défilement X, chaque galet 411, 421, 431, 441, solidaire d'un organe de maintien associé au chariot, coulisse à l'intérieur de sa rainure. Le profil de la rainure détermine alors le déplacement du galet - et donc de l'organe associé - dans la direction transversale Z.

A l'issue de l'étape de réagencement, les flans F sont déplacés, au moyen du peigne 24 sur deux pistes, dans la direction de défilement X, jusqu'à une station 140 de dépose de bandelettes d'arrachage comprenant au moins un dispositif de dépose 90. Dans l'exemple illustré, le dispositif de dépose 90 comprend une première section 91 configurée pour déposer une première bandelette B1, avantageusement mais non exclusivement en forme de V sur chaque flan F, et une deuxième section 92 configurée pour réaliser un deuxième dépôt d'une deuxième bandelette B2, avantageusement de forme droite. L'application de bandelettes d'arrachage se fait généralement par thermoscellage, et les dispositifs de dépose 90, bien connus, ne sont donc pas décrits ici plus en détail.

Le module de confection 100 peut également comporter, en complément, une ou plusieurs stations 150 de dépose d'étiquettes, où les étiquettes sont par exemple collées par collage à froid.

Les flans ainsi préparés sont ensuite transférés au module de conditionnement 200 qui comprend typiquement :
- une station de formage 210 dans laquelle chaque flan est conformé sous forme d'une coquille destinée à recevoir le produit, par exemple à l'aide d'emboutisseurs,
- un dispositif de transfert 280, muni d'alvéoles, permettant d'acheminer de manière cadencée et positionnée les coquilles sous chacune des stations de conditionnement suivantes,
- une station de dosage 220 dans laquelle le produit est distribué dans les dites coquilles,
- une station 230 de découpe et dépose d'un couvercle sur le produit dans la coquille,
- une station de pliage 240 pour rabattre les bords protubérants de la coquille sur le couvercle et ainsi refermer l'emballage autour du produit
- une station 250 de tassement et de scellage incluant des corps chauffants appliquant une pression sur l'emballage
- un dispositif d'extraction 260 configuré pour extraire les portions de leur alvéole,
- un système de sortie 270, avec des fonctions permettant l'interfaçage vers le système de mise en boîte en aval de la machine.

## Revendications

1. Procédé de confection de flans d'emballage (F, F1, F2, F3, F4), notamment de flans d'emballage de forme globale triangulaire, comprenant au moins les étapes suivantes :
- une étape d'avance d'un matériau d'emballage (M) sous forme de film sur un support (16) définissant un plan de défilement (P) et selon une direction de défilement (X), et
- une étape de découpe dudit matériau d'emballage (M) à l'aide d'un découpoir (20) pour former au moins un groupe (G) de quatre flans d'emballage (F1, F2, F3, F4) répartis sur respectivement quatre pistes (T1, T2, T3, T4) juxtaposées dans une direction transversale (Z) orthogonale à la direction de défilement (X),
le procédé étant **caractérisé en ce qu'**il comprend, après l'étape de découpe, une étape de réagencement sur deux pistes (T1', T2') des flans (F1, F2, F3, F4) découpés sur quatre pistes (T1, T2, T3, T4).

2. Procédé de confection selon la revendication 1, dans lequel les quatre flans d'emballage (T1, T2, T3, T4) d'un même groupe (G) sont découpés en quinconce.

3. Procédé de confection selon la revendication 1 ou 2, dans lequel l'étape de réagencement comprend le déplacement différencié d'une première paire (C) de flans (F1, F3) et d'une deuxième paire (D) de flans (F2, F4) d'un même groupe (G), de sorte que les flans (F1, F3) de la première paire (C) et les flans (F2, F4) de la deuxième paire (D) se retrouvent espacés d'un pas (S) dans la direction de défilement (X).

4. Procédé de confection selon la revendication 3, dans lequel l'étape de réagencement comprend en outre l'ajustement d'une distance, mesurée dans la direction transversale (Z), entre les deux flans (F1, F3 ; F2, F4) d'une même paire (C, D).

5. Procédé de confection selon l'une quelconque des revendications 1 à 4, dans lequel l'étape de réagencement comprend le déplacement des quatre flans (F1, F2, F3, F4) d'un même groupe (G).

6. Procédé de confection selon l'une quelconque des revendications 1 à 5, comprenant, entre l'étape de découpe et l'étape de réagencement, une étape d'extraction des flans hors du découpoir (20), par translation des flans (F1, F2, F3, F4) dans la direction de défilement (X).

7. Procédé de confection selon l'une quelconque des revendications 1 à 6, dans lequel l'étape de réagencement comprend le maintien des flans d'au moins une paire (C, D) de flans par leurs faces opposées au support (16) et le déplacement de chaque flan ainsi maintenu selon un mouvement comprenant au moins une composante dans la direction de défilement (X) et au moins une composante dans une direction verticale (Y) orthogonale au plan de défilement (P).

8. Procédé de confection selon l'une quelconque des revendications 1 à 7, dans lequel l'étape de réagencement est réalisée après l'étape de découpe et avant une étape de dépose de bandelettes d'arrachage (B1, B2) sur chaque flan d'emballage (F).

9. Procédé d'emballage d'un produit, notamment d'un produit alimentaire, en particulier d'un produit alimentaire pâteux, comprenant :
- la confection de flans d'emballage (F) par mise en œuvre du procédé selon l'une quelconque des revendications 1 à 8, et
- le conditionnement du produit dans lesdits flans d'emballage (F) pour former des portions de produit emballées.

10. Module (100) de confection de flans d'emballage (F, F1, F2, F3, F4), notamment de flans d'emballage de forme globale triangulaire, comprenant:
- des moyens (10) d'avance d'un film de matériau d'emballage sur un support (16) définissant un plan de défilement (P) et selon une direction de défilement, et
- une station de découpe (120) comprenant un découpoir (20) pour la découpe, dans ledit matériau d'emballage (M), d'au moins un groupe (G) de quatre flans d'emballage (F1, F2, F3, F4) sur respectivement quatre pistes (T1, T2, T3, T4) juxtaposées dans une direction transversale (Y) orthogonale à la direction de défilement (X),
ledit module (100) étant **caractérisé en ce qu'**il comprend, après la station de découpe (120), une station (130) de réagencement comprenant un dispositif (40) de réagencement de flans pour le réagencement sur deux pistes (T1', T2') des flans découpés sur quatre pistes.

11. Module de confection (100) selon la revendication 10, dans lequel la station de réagencement (130) est disposée après la station de découpe (120) et avant une station (140) de dépose de bandelettes d'arrachage (B1, B2) sur chaque flan d'emballage (F1, F2, F3, F4).

12. Machine d'emballage (1000) d'un produit, notamment d'un produit alimentaire, en particulier d'un produit alimentaire pâteux, comprenant :
- au moins un module (100) de confection de flans d'emballage (F) selon la revendication 10 ou 11, et
- un module (200) de conditionnement du produit dans lesdits flans d'emballage (F) pour former des portions de produit emballées.

13. Dispositif (40) pour le réagencement d'une pluralité de flans d'emballage (F1, F2, F3, F4) sur un support (16) définissant un plan de défilement (P), ledit dispositif de réagencement (40) étant notamment adapté pour être intégré dans un module (100) selon la revendication 10 ou 11, et le dispositif de réagencement (40) comprenant :
- une pluralité d'organes de maintien (41, 42, 43, 44), chacun étant configuré pour maintenir un desdits flans (F1, F2, F3, F4) par la face libre dudit flan opposée au support (16), et
- un système de déplacement (50) pour conférer à au moins un organe de maintien (41, 42, 43, 44) un mouvement comprenant une composante dans une première direction (Y') orthogonale audit plan de défilement (P), une composante dans une deuxième direction (X') parallèle audit plan de défilement (P), et une composante dans une troisième direction (Z') orthogonale à la première direction (Y') et à la deuxième direction (X').

14. Dispositif de réagencement (40) selon la revendication 13, dans lequel le système de déplacement (50) comprend une base (60) mobile en translation dans la première direction (Y') et portant les organes de maintien (41, 42, 43, 44).

15. Dispositif de réagencement (40) selon la revendication 14, dans lequel le système de déplacement (50) comprend en outre au moins un chariot (51, 52) monté coulissant par rapport à la base (60) dans la deuxième direction (X'), ledit au moins un chariot comprenant au moins un rail (511, 512, 521, 522) s'étendant dans la troisième direction (Z'), avec au moins un organe de maintien (41, 42, 43, 44) monté coulissant le long dudit au moins un rail (511, 512, 521, 522).

16. Dispositif de réagencement selon la revendication 14 ou 15, dans lequel le système de déplacement (50) comprend des moyens pour l'entraînement actif de ladite base (60) dans la première direction (Y') et/ou de chaque chariot (51, 52) dans la deuxième direction (X').

17. Dispositif de réagencement (40) selon l'une quelconque des revendications 13 à 16, dans lequel le système de déplacement (50) comprend un dispositif de guidage passif (80) configuré pour coopérer avec au moins un organe de maintien lors de son déplacement dans la deuxième direction (X') de sorte à dériver dudit déplacement son déplacement dans la troisième direction (Z').

18. Dispositif de réagencement (40) selon la revendication 17, dans lequel le dispositif de guidage (80) comprend au moins une rainure de guidage (81, 82, 83, 84) configurée pour recevoir de manière coulissante un galet (411, 421, 431, 441) solidaire dudit organe de maintien.
